# EUROPEAN PATENT SPECIFICATION

(11) **EP 1 777 144 B1**
(45) Date of publication and mention of the grant of the patent: **27.08.2008**
(21) Application number: 06021349.3
(22) Date of filing: 11.10.2006
(51) Int. Cl.: B62D 15/02, G06K 9/00, G06T 1/00, H04N 7/18, B60R 1/00, G06T 7/00

(54) **Parking assist method and a parking assist apparatus**
Einparkhilfsverfahren und -einrichtung für ein Fahrzeug
Procédé et dispositif d'assistance au parking

(30) Priority: 19.10.2005 JP 2005304936
(43) Date of publication of application: 25.04.2007
(73) Proprietor: AISIN AW CO., LTD., Anjo-shi, Aichi 444-1192 (JP)
(72) Inventor: Sugiura, Hiroaki, Okazaki-shi, Aichi 444-8564 (JP); Miyazaki, Hideto, Okazaki-shi, Aichi 444-8564 (JP); Mori, Toshihiro, Okazaki-shi, Aichi 444-8564 (JP)
(74) Representative: Kramer - Barske - Schmidtchen

(56) References cited:
- JP-A- 2004 350 303
- JP-A- 2005 284 877
- US-A1- 2003 108 222
- US-A1- 2005 128 061

## Description

The present invention relates to a parking assist method and a parking assist apparatus.

Hitherto, a parking assist apparatus for assisting in a series of operations to park a vehicle is well known. The parking assist apparatus obtains image data obtained by an in-vehicle camera which is attached to the rear of the vehicle and outputs the image data on a monitor display mounted near the driver's seat. Although the in-vehicle camera typically provides images of the area behind of the vehicle (or more specifically, images of the area behind the rear bumper of the vehicle), the area beneath the body of the vehicle and the area around a rear corner of the vehicle are out of the viewing area of the in-vehicle camera. Therefore, the more the vehicle enters a parking space, the more a landmark, such as a white line marking the parking space, goes out of the viewing area of the in-vehicle camera, so that such a condition will make it difficult for a driver to park the vehicle because the driver can not determine the relative distance between the vehicle and the parking space or the position of a wheel stopper in the monitor.

To resolve such a problem, an apparatus, which stores image data obtained by an in-vehicle camera in a memory and which displays composite image data made up of accumulated past image data and current image data, for example, described in Japanese Unexamined Patent Application Publication No. 2003-244688, is suggested. Such an apparatus reads out image data of an area hidden by a blind spot of the in-vehicle camera and outputs a composite image using the image data.

However, in the conventional apparatuses described above, the composite image would be always displayed up completion of storing image data, for example, even during the early stage of parking such as when the vehicle has not even entered a parking space. Therefore, even if the driver wants to see a wide view of the area which is currently being imaged by the in-vehicle camera, the unwanted composite image may be displayed on a monitor. There is a need for the apparatuses to display the composite image at a suitable moment when the driver wants to see the area hidden by the blind spot of the in-vehicle camera.

US 2003/108222 A1 discloses the features of the preambles of claims 1 and 2, respectively.

US 2005/128061 ail discloses a side obstacle warning system which displays an image of an area alongside and to the rear of a vehicle.

JP 2004 350303 A discloses an image processing system for a vehicle to reduce the sense of anxiety about a blind spot by providing a synthesized image for blind spot region around a vehicle.

JP 2005 284877 A discloses an on board equipment to enable a driver to automatically control the operation of a blind monitor even in a place where the driver drives a vehicle for the first time.

Accordingly, it is an object of the present invention to provide a parking assist method and a parking assist apparatus for displaying a parking assist image using recorded image data at a suitable moment.

As solution to the above problem the present invention provides a parking assist method according to claim 1 and a parking assist apparatus according to claim 2.

Various exemplary implementations of the principles for explaining the present invention provide a parking assist method for accumulating image data, which is obtained from an imaging device mounted on a vehicle, as recorded image data in an image data storage means, displaying a parking assist image using the recorded image data, wherein an area hidden by a current blind spot of the imaging device is shown, recognizing an object in the vicinity of the vehicle, and determining when to display the parking assist image, wherein the are hidden by the current blind spot of the imaging device is shown, based on the position of the object in relation to the blind spot of the imaging device.

Various exemplary implementations of the principles for explaining the present invention provide a parking assist apparatus mounted in a vehicle, comprising: an image data obtaining means for obtaining image data from an imaging device mounted on the vehicle; an image data storage means for storing the obtained image data as recorded image data; a recognizing means for recognizing an object; a determining means for determining when to display a parking assist image, wherein an area hidden by a current blind spot of the imaging device is shown, based on a position of the recognized object in relation to the blind spot of the imaging device; and a display control means for displaying the parking assist image using both the current image data taken at the current position of the vehicle and the recorded image data including the area hidden by the current blind spot of the imaging device, the recorded image data being stored in the image data storage means, and for also displaying an indicator indicating the current position of the vehicle with the parking assist image at a suitable time determined by the determining means. Therefore, for example, when the recognized object is located within a viewing range of the imaging device, the parking assist apparatus may output a view of the background of the vehicle in a screen and switch the screen to the parking assist image at a suitable moment when the recognized object is about to go or is going out of the viewing area of the imaging device. More specifically, when the object which the driver wants to check goes out of sight, the area hidden by the blind spot wherein the object is currently located is displayed so that the driver may continuously check the position of the object even though the current imaging device is not actually taking an image of the object within such blind area. As the result, the driver may park the vehicle at an intended spot within the parking space. Further the driver may operate the vehicle to reduce an impact of crashing between the vehicle and the object.

Various exemplary implementations of the principles for explaining the present invention provide the parking assist apparatus, wherein the determining means determines that the moment a part or full view of the recognized object enters the blind spot of the imaging device is the appropriate time to display the parking assist image using the recorded image data. Therefore, for example, when the object is seated under the vehicle and when the object is no more included within the image data, the recorded image data is output instead, so that the driver may still know the relative position and the relative distance between the vehicle and the object.

Various exemplary implementations of the principles for explaining the present invention provide the parking assist apparatus, wherein the imaging device is mounted on the upper side of the bumper of the vehicle and the determining means determines that the moment a part or full view of the recognized object moves under the bumper of the vehicle is the appropriate time to display the parking assist image. Therefore, the parking assist image may be displayed at the timing when the object is located under the bumper according to the move of the vehicle toward the parking space.

Various exemplary implementations of the principles for explaining the present invention provide the parking assist apparatus, wherein the display control means outputs the recorded image data including that of the area hidden by the blind spot of the imaging device within a display area of the display means so that the direction of movement in the image displayed is that of the recognized object. Therefore, even if a part or full view of the object can not be seen in the display flame, the blind spot may be displayed in the moving direction of the object, so that the driver may easily understand which part of road surface is currently displayed.

Various exemplary implementations of the principles for explaining the present invention provide the parking assist apparatus, wherein the recognized object is a wheel stopper or a white line indicating a parking space, and the recognizing means recognizes the wheel stopper or the white line by manipulating the image data. Therefore, even if the wheel stopper or the white line goes out of the viewing area of the imaging device, the recorded image data including the area hidden by the blind spot may be displayed at a suitable moment, and may allow the driver to check the relative position and the distance between a wheel of the vehicle and the wheel stopper or the relative position and the distance between the rear of the vehicle and the white line.

Various exemplary implementations of the principles for explaining the present invention provide the parking assist apparatus, wherein the recognized object is an obstacle located within or around the parking space, and the recognizing means recognizes the obstacle by manipulating the image data. Therefore, for example, even when the obstacle goes out of the viewing area of the imaging device, the recorded image data including the area hidden by the blind spot may be displayed. Thus the driver may check a relative position and a distance between the vehicle and the obstacle at a suitable moment.

Various exemplary implementations of the principles for explaining the present invention provide the parking assist apparatus, wherein the recognizing means recognizes the object on the basis of an input operation performed by means of an input operation device to specify the object. This operation enables the driver to recognize only the necessary object to check the relative position with the vehicle.

Various exemplary implementations of the principles for explaining the present invention provide the parking assist apparatus, wherein the parking assist apparatus displays, provided that the parking assist apparatus determines it is not the time to display the parking assist image on the basis of the determination of the determining means, the image data obtained at the current position of the vehicle in the display means instead of the parking assist image. Therefore, when the object is within the viewing range of the imaging device, the wide view of the background of the vehicle may be displayed in the display means.

### BRIEF DESCRIPTION OF THE DRAWINGS

FIG. 1 is a block diagram of a parking assist apparatus according to the present invention;
FIG. 2A is a diagram showing a vehicle entering a parking space and FIG. 2B is a diagram showing the vehicle after parking has been completed;
FIG. 3 is a diagram showing recorded image data;
FIG. 4 is a diagram showing an additional line;
FIGs. 5A and 5B are diagrams showing detection of edges for image data of a wheel stopper and FIG. 5C is a diagram showing image data when the wheel stopper goes out of sight;
FIG. 6A is a diagram showing detection of edges for image data of an obstacle and FIG. 6B is a diagram showing image data when the obstacle goes out of sight;
FIG. 7 is a diagram showing a guide line;
FIG. 8 is a flowchart of processing according to the present embodiment;
FIG. 9 is a flowchart of processing according to the present embodiment;
FIG. 10 is a flowchart of processing according to the present embodiment;
FIG. 11 is a diagram showing switching of screens. FIGs. 11A through 11C are diagrams showing a back monitor screen before switching to a parking assist image and FIG. 11D) is a diagram showing the parking assist image;
FIG. 12A is a diagram showing recorded image data, FIG. 12B is a diagram showing current image data, and FIG. 12C is a diagram showing blended data;
FIG. 13 is a diagram showing a parking assist image;
FIG. 14 is a diagram showing switching of screens. FIGs. 14A through 14C are diagrams showing a back monitor screen before switching to a parking assist image and FIG. 14D is a diagram showing the parking assist image;
FIG. 15 is a diagram showing another screen; and
FIG. 16 is a diagram showing another parking assist image.

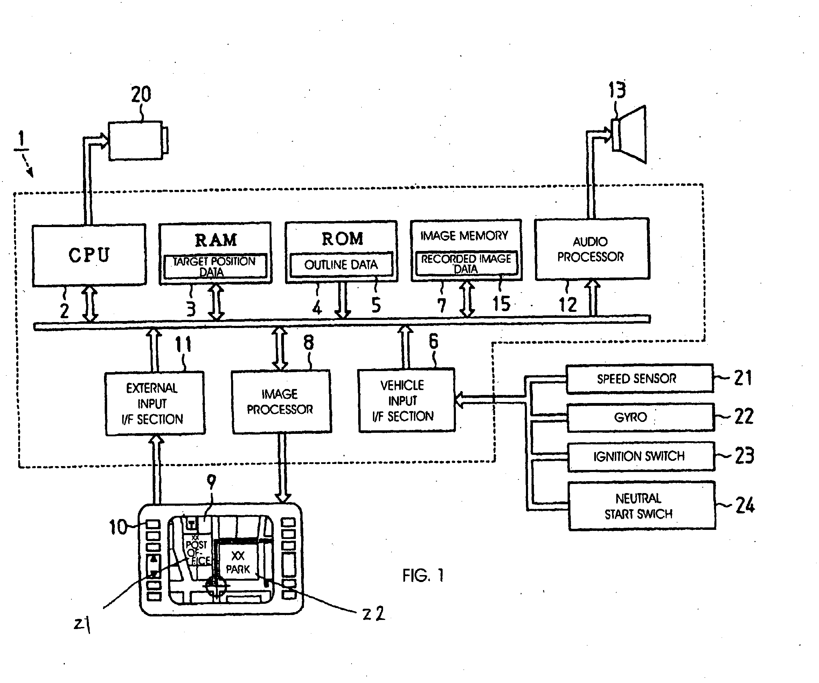

An embodiment of the present invention is described with reference to FIGs. 1 to 13 below.

As shown in FIG. 1, a parking assist apparatus 1 mounted in a vehicle C includes a CPU 2 as an image data obtaining means. The CPU 2 inputs a speed pulse and a direction detection signal of a speed sensor 21 and a gyro 22 respectively through a vehicle input I/F section 6. Further, the CPU 2 calculates the relative coordinates of a reference position of the vehicle C based on the input speed pulse and the direction detection signal.

The CPU 2 also inputs the on/off signals of an ignition system (not shown) from an ignition switch 23 of the vehicle C via the vehicle input I/F section 6. When the CPU 2 inputs the on-signal from the ignition switch 23, the parking assist apparatus 1 is activated. When the CPU 2 inputs the off-signal, the running parking assist apparatus 1 enters a sleep mode and waits for the next on-signal from the ignition switch 23. Next, the CPU 2 inputs a shift position signal indicating the current shift position of the vehicle C from a neutral start switch 24 via the vehicle input I/F section 6. The CPU 2 updates the shift position as a variable number stored in a RAM 3 based on the shift position signal.

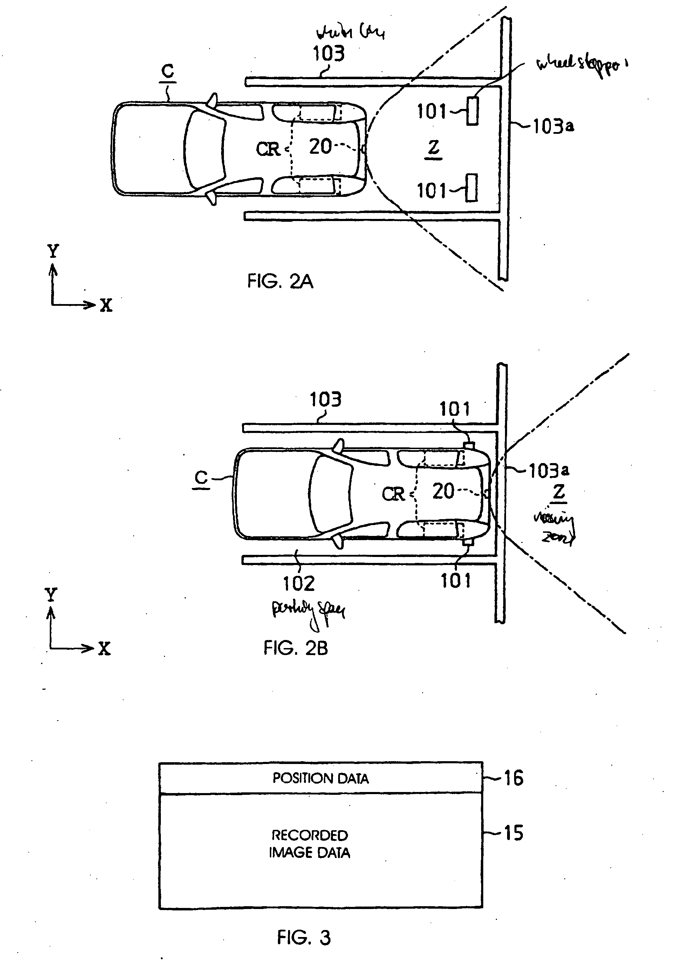

When the CPU 2 inputs the on-signal from the ignition switch 23, the CPU 2 activates a camera 20 as an imaging device mounted on the vehicle C and obtains image data G which contains visual information on the area behind of the vehicle C at a given time. As shown in FIGs. 2A and 2B, the camera 20 is positioned roughly in the center of the rear of the vehicle (in y-axis direction in vehicle coordinate system) and the optical axis of the camera faces downward. The camera 20 is a digital camera capable of taking color images and generating the image data G which undergoes analog/digital conversion. The digital camera may have optics (not shown) such as, for example, a wide-angle lens, a mirror, and so on, and a CCD image sensor (not shown). For example, the camera 20 may have a 140 degree wide field of view and the viewing area Z of the camera 20 may be about several meters from a part of the rear bumper of the vehicle C.

The CPU 2 stores the image data G as recorded image data 15 in an image memory 7 functions as an image data storage means at a suitable time as being related to position data 16 indicating an image position as shown in FIG. 3. The recorded image data 15 may include a white line 103 marking a parking space 102 on the road surface behind the vehicle C and a wheel stopper 101 (as shown in FIG. 2).

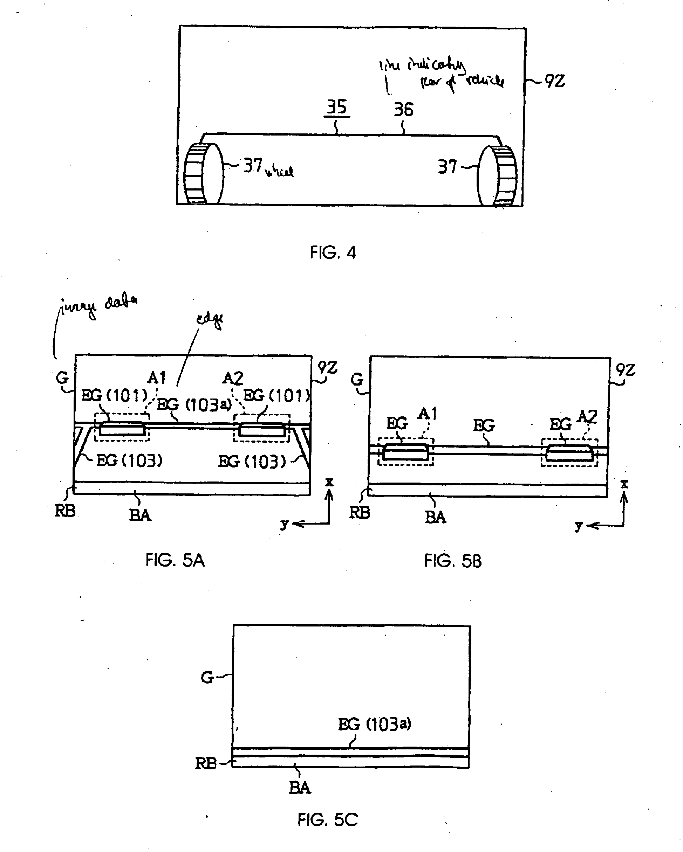

Further, as shown in FIG. 1, outline data 5 may be stored in a ROM 4 of the parking assist apparatus 1. The outline data 5 is data for generating an outline of the vehicle C, wherein the parking assist apparatus 1 is installed, as shown in FIG. 2. When the outline data 5 is output in a display 9 during a parking assist mode, an additional line 35 is displayed in a display area 9z on the display 9 as a guide as shown in FIG. 4. The additional line 35 may include a framework line 36 indicating the outline of the rear of the vehicle and a wheel line 37 indicating the position of each rear wheel CR (FIG. 2). The framework line 36 and the wheel line 37 are virtual lines indicating the positions of each of the rear of the vehicle and the rear wheels CR as seen from the center point between the rear wheels CR.

An image processor 8, which functions as the recognizing means, the determining means, and the display control means in FIG. 1, manipulates the image data G taken by the camera 20. More specifically, the image processor 8 detects an object behind the vehicle C on the basis of the image data G. In the present embodiment, the recognized object is the wheel stopper 101 behind the vehicle C, the white line 103 marking the parking space 102 (in FIG. 2), or an obstacle 104.

For example, as shown in FIGs. 5A and 5B, the image processor 8 detects edges from the image data G. Then the image processor 8 searches for an edge EG of the recognized object among all detected edges EG on the basis of pattern information data (not shown) given therefor. The image processor 8 may abstract other feature points than the edge. As the pattern information, the image processor 8 may have data indicating the number of feature points which is known when the edge of the wheel stopper 101 is detected or a template data indicating the figure of the wheel stopper 101. The image processor 8 determines whether image data pertaining to the recognizable edge EG of the wheel stopper 101 is in the image data G on the basis of all the detected edges EG and the pattern information. Note that, since the camera 20 has a wide-angle lens, the actual image data G might distort due to lens aberration. However, such image distortion is not shown here as a matter of convenience.

When the image processor 8 recognizes the white line 103, the image processor 8 detects the edge EG of the white line 103 from the image data G as shown in FIG. 5A as heretofore. Then, on the basis of the number of features of the detected edge EG, the image processor 8 determines whether the edge EG is of the white line 103 or not.

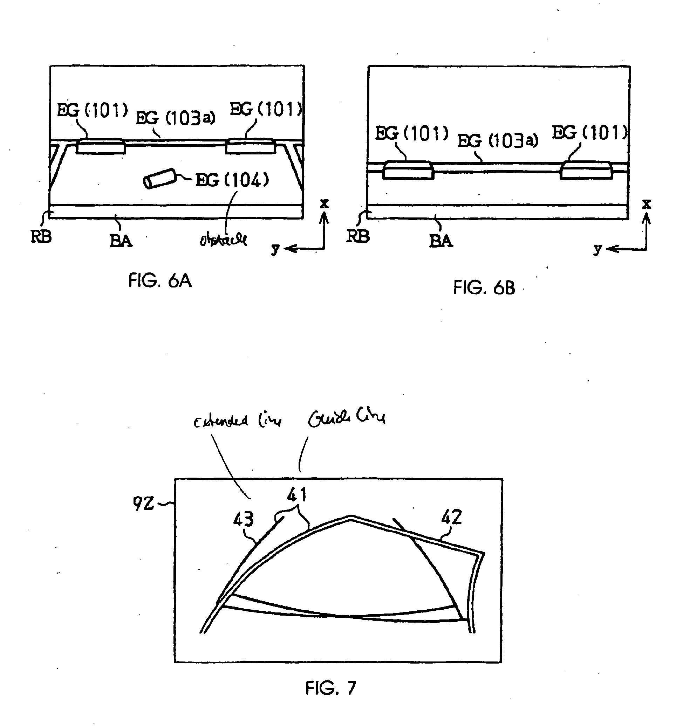

The image processor 8 further detects the obstacle 104 on the road such as, a relatively large stone, a can, or a piece of trash, based on the image data G. As shown in FIG. 6A, the image processor 8 detects edges from the image data G and determines edges which form some sort of figure, such as edges in groups, circular edges, and brachymorphic edges, as the edge EG of the obstacle 104.

The image processor 8 tracks the edges EG of each of the wheel stopper 101, the white line 103, and the obstacle 104 in accordance with the movement of the vehicle C. For example, as shown in FIG. 5A, the image processor 8 temporarily stores pixel coordinates of each of a small area A1 and a small area A2 including the edge EG of the detected wheel stopper 101. Then the image processor 8 inputs newly obtained image data G from the CPU 2. Based on the speed pulse input by the CPU 2, the image processor 8 determines which coordinates the previously input small areas A1 and A2 in the image data G are moved to in accordance with the moving direction of the vehicle and the moving distance. As shown in FIG. 5B, a new edge EG which has the smallest difference from the previously detected edge EG of the wheel stopper 101 is searched within and around the small areas A1 and A2 after movement of the vehicle. Or a new edge EG which is similar to the previously detected edge EG of the wheel stopper 101 may be searched within the range of the display area 9z.

Whenever inputting the image data G through the CPU 2, the image processor 8 calculates a relative position between the edge EG corresponding to the recognized object and an area behind the vehicle BA within the image data G on the basis of the image data G. The term "the area behind the vehicle BA" here means an area including the rear of the vehicle RB and the rear bumper 25 of the vehicle C. In this case, the position of the camera 20 and the optical axis are fixed so that the relative position between the camera 20 and the rear bumper 25 is fixed as well. Therefore the coordinates for the area behind the vehicle BA may be calculated in advance.

Next, the image processor 8 waits for the edge EG to completely enter the area behind the vehicle BA during tracking, the edge EG corresponding to the recognized object such as, for example, the wheel stopper 101. As shown in FIG. 5A, in the case that the wheel stopper 101 is within the viewing area Z of the camera 20, the image processor 8 outputs the current image data G in the display 9 and overlaps a guide line 41 on the image data G as shown in FIG. 7. The guide line 41 may include a probable movement locus 42 drawn depending on the rudder angle of the vehicle C and an extended line 43 indicating the width of the vehicle C.

Then as shown in FIG. 2B, when the vehicle C enters the parking space 102 and the wheel stopper 101 is located under the rear of the vehicle C, the wheel stopper 101 is no longer within the viewing area Z of the camera 20. More specifically, as shown in FIG. 5C, when the edge EG corresponding to the wheel stopper 101 completely enters the area behind the vehicle BA, the image processor 8 determines that an image, created by using the previously recorded image data 15 should be displayed on the display 9. The recorded image data 15 used by the image processor 8 at this time is data including the area hidden by the blind spot of the camera 20.

In a similar way, the image processor 8 tracks the edges EG of the white line 103 and the obstacle 104 in accordance with the move of the vehicle C. When tracking the edge EG of the white line 103, the image processor 8 tracks not the entire white line 103 but only the end of the white line 103a (as shown in FIG. 2A), which runs roughly at right angles to the moving direction of the vehicle C, within the parking space 102. Then the image processor 8 waits until the edge EG corresponding to the white line 103a completely enters the area behind the vehicle BA, at which point an image using the recorded image data 15 on the display 9 is output.

When tracking the obstacle 104, as shown in FIG. 6B, when the edge EG corresponding to the obstacle 104 completely enters the area behind the vehicle BA, the image processor 8 outputs an image using the recorded image data 15 on the display 9. Note that, when the image processor 8 detects the edges EG for a number of objects such as, for example, the wheel stopper 101, the white line 103a, and the obstacle 104, the image processor 8 displays an image using the recorded image data 15 on the display 9 when any one of edges EG for the detected objects completely enters the area behind the vehicle BA.

The display 9 connected to the parking assist apparatus 1 is a touch panel. When an input is made on the touch panel, the CPU 2 inputs a predetermined signal corresponding to the input operation through an external input I/F section 11 of the parking assist apparatus 1 (as shown in FIG. 1). The CPU 2 further inputs a predetermined signal corresponding to an input operation through the external input I/F section 11 even in the case that an input is made by means of an operation switch 10 as input operation means next to the display 9. The parking assist apparatus 1 may include an audio processor 12 which outputs an alarm and/or a guide from a speaker 13 connected to the parking assist apparatus 1, if needed.

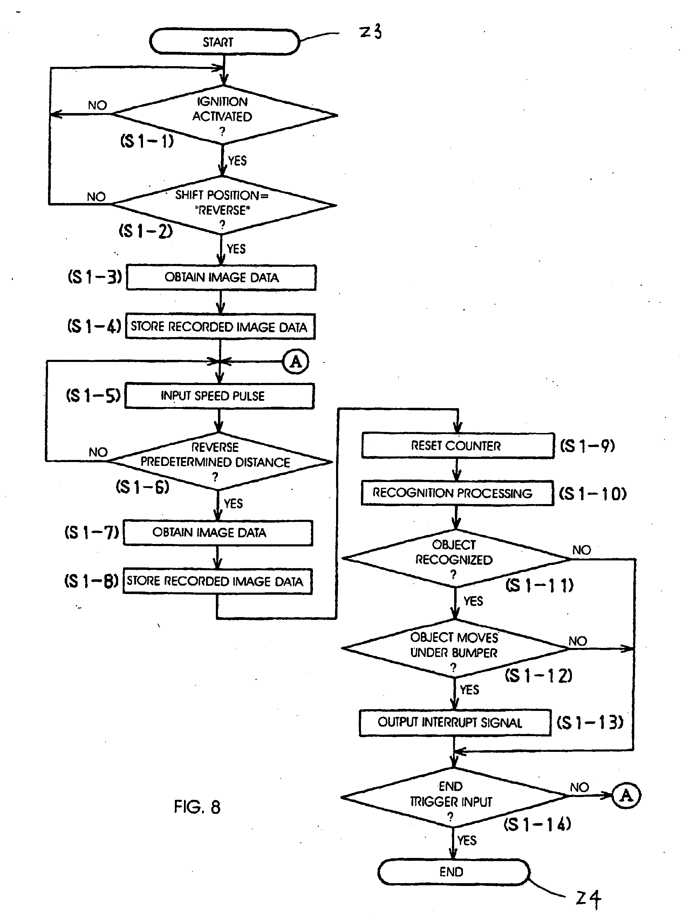

Next, the procedures for the current embodiment will be described with reference to FIG. 8. As shown in FIG. 8, the CPU 2 of the parking assist apparatus 1 waits for an on-signal from the ignition switch 23 to determine whether the ignition system is activated (Step S1-1). When inputting the on-signal from the ignition switch 23 (Step S1-1=YES), the CPU 2 sets a bootable flag stored in the RAM 3 as "1" which means "on-state". Next, the CPU 2 determines whether the shift position of the current vehicle C is "reverse" or not based on the shift position signal from the neutral start switch 24 (Step S1-2). If the shift position is other than "reverse" (Step S1-2=NO), the CPU 2 sets an applicable value for the shift position as a variable stored in the RAM 3 and the procedure returns to Step S1-1. On the other hand, if the shift position is "reverse"(Step S1-2=YES), the CPU 2 changes the shift position stored in the RAM 3 as "reverse", and the position, at where the shift position was changed to "reverse", is set as an initial position.

When the shift position is changed to "reverse", the CPU 2 controls the camera 20 to obtain the image data G taken at the initial position (Step S1-3). Then the CPU 2 stores a new image, which is related to both position data 16 indicating the initial position and the image data G, as the recorded image data 15 in the image memory 7 (Step S1-4).

When storing the recorded image data 15 taken at the initial position, the CPU 2 inputs the speed pulse from the speed sensor 21 (Step S1-5). Depending on the number of input pulses, the CPU 2 updates a distance counter stored in the RAM 3. The distance counter is a counter for accumulating the number of input pulses. Every time the pulse is input, the number of input pulses is added to the accumulated number of pulses C1 displayed on the counter.

The CPU 2 determines whether the number of the accumulated pulses C1 is a number corresponding to a predetermined distance and further determines whether the vehicle C reverses such a predetermined distance (Step S1-6). In the present embodiment, the predetermined distance is set at 200 mm. When the CPU 2 determines that the vehicle C does not reverse the predetermined distance (200 mm) in Step S1-4, the procedure returns to Step S1-3. The CPU 2 waits for the vehicle C to reverse the predetermined distance (200 mm) during updating of the distance counter.

When the CPU 2 determines that the vehicle C has reversed the predetermined distance (200 mm) in Step S1-6, the CPU 2 controls the camera 20 to obtain the image data G (Step S1-7). Then the CPU 2 calculates the relative coordinates of the current position based on the initial position, where the shift position is changed to "reverse", in consideration of the speed pulse and the direction detection signal, and relates the relative coordinates to the obtained image data G as the position data 16. Then the CPU 2 stores the image data G as the recorded image data 15 in the image memory 7 (Step S1-8). As the CPU 2 stores the recorded image data 15 in the image memory 7, the CPU 2 resets the number of the accumulated pulses C1 of the distance counter to the initial value "0" (Step S1-9).

Next, the CPU 2 controls the image processor 8 and recognizes the objects as described above based on the image data G obtained in Step S1-5 (Step S1-10). More specifically, the CPU 2 detects edges from the image data G and searches the edges EG for the recognized objects among all of the detected edges based on the pattern information as described above. Then the CPU 2 determines whether any one of the wheel stopper 101, the white line 103a, or the obstacle 104 is recognized (Step S1-11). When the CPU 2 does not recognize any of them above (Step S1-11=NO), the procedure goes to Step S1-14 and the CPU 2 determines whether an end trigger is input or not. In the current embodiment, the end trigger is a signal indicating any shift positions except "reverse" output from the neutral start switch 24. When the CPU 2 determines that the end trigger is not input (Step S1-14=NO), the procedure returns to Step S1-5.

When the CPU 2 determines that any one of the wheel stopper 101, the white line 103a, or the obstacle 104 is recognized (Step S1-11=YES), the CPU 2 further determines whether the recognized object is now located under the rear bumper 25 (Step S1-12). At this time, the image processor 8 determines whether the edge EG of the recognized object completely enters the area behind the vehicle BA. As shown in FIGs. 5C and 6B, when the image processor 8 determines that the edge EG corresponding to the wheel stopper 101 or the edge EG corresponding to the obstacle 104 is not displayed within the display area 9z on the display 9 because such an edge EG completely enters the area behind the vehicle BA (Step S1-12=YES), the image processor 8 outputs a predetermined interrupt signal to the CPU 2 (Step S1-13). The interrupt signal is a signal for changing the image display mode to a new image display mode using the recorded image data 15. AS shown in FIGs. 5A, 5B, and 6A, when the edge EG of the recognized object does not enter the area behind the vehicle BA (Step S1-12=NO), the procedure goes to Step S1-14.

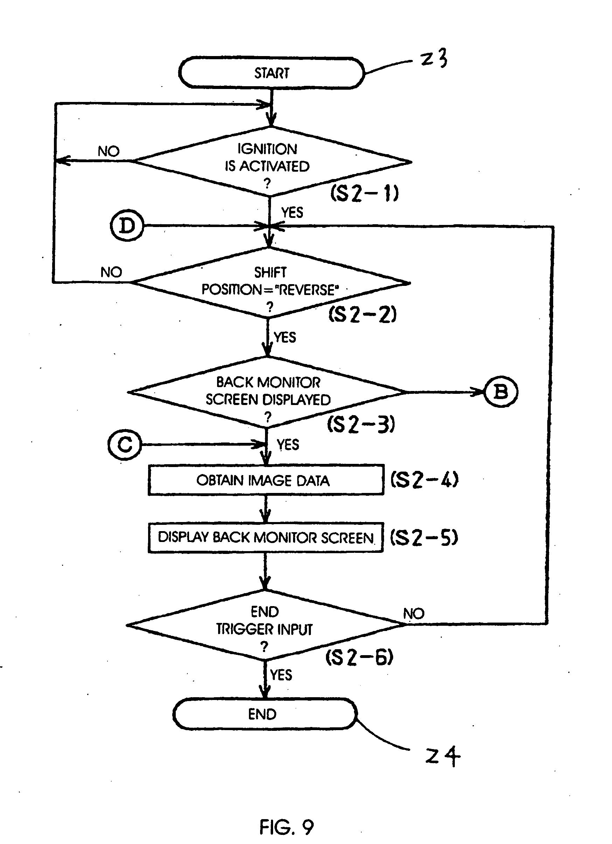

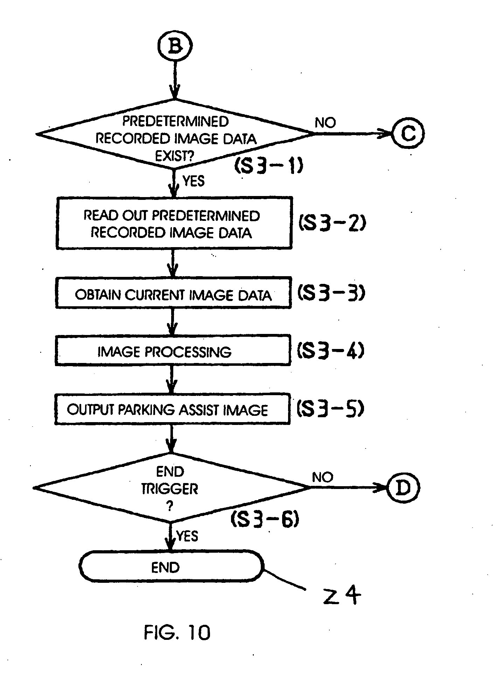

Next, the procedure for displaying an image on the display 9 will be described with reference to FIG. 9. The procedure in FIG. 9 is executed concurrently with the procedures (Step S1-1 through S1-14) as described above. First, when the CPU 2 of the parking assist apparatus 1 inputs the on-signal from the ignition switch 23 (Step S2-1=YES) and determines that the shift position is "reverse" (Step S2-2=YES), the CPU 2 further determines whether a back monitor display should be displayed (Step S2-3). The CPU 2 further determines whether the interrupt signal described above is input or not. In the case that there is no input interrupt signal, the CPU 2 determines that the back monitor display should be displayed (Step S2-3=YES) and the procedure goes to Step S2-4. In the case that the interrupt signal is input, the procedure goes to Step S3-1 in FIG. 10 to display an image using the recorded image data 15. More specifically, when the image processor 8 determines that the recognized object is not located under the vehicle C and when the interrupt signal is not output, the image processor 8 executes the display of the back monitor display. On the other hand, when the image processor 8 determines that the recognized object is now located under the vehicle C and the interrupt signal is output in Step S1-13, the image processor 8 executes the display of the image using the recorded image data 15.

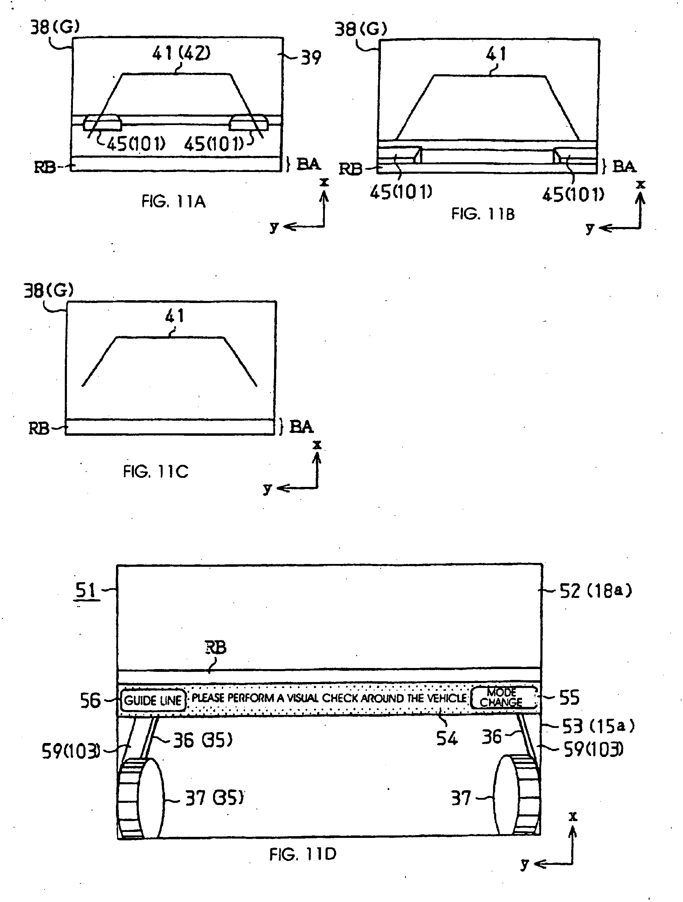

In step S2-3, when determining that the back monitor display should be displayed, the CPU 2 controls the camera 20 to obtain the image data G (Step S2-4). The image data G is obtained at the rate of 30 frames per second. When obtaining the image data G, the image processor 8 outputs the input image data G and various drawing data on the display 9 and displays the back monitor screen 38 as shown in FIG. 11A (Step S2-5). AS shown in FIG. 11A, a background 39 and the area behind the vehicle RB are displayed in the back monitor screen 38 based on the current image data G. Further, the image processor 8 overlaps the guide line 41 over the background 39. The guide line 41 here may be the extended line 43 indicating the width of the vehicle C and the probable movement locus 42.

When the image processor 8 displays the back monitor screen 38, the CPU 2 determines whether the end trigger as described above is input or not (Step S2-6). In case that the CPU 2 determines that the end trigger is not input (Step S2-6=NO), the procedure returns to Step S2-2 and the CPU 2 waits for the input of the interrupt signal and the end trigger while updating the back monitor screen 38.

The vehicle C enters within the parking space 102 and the wheel stopper 101 comes close to the rear wheel CR. The image processor 8 detects edges for each image data G obtained each time the vehicle C reverses the predetermined distance (200 mm in this embodiment) and tracks the edges EG corresponding to recognized objects in accordance with the movement of the vehicle C. In Step S1-12, the image processor 8 determines whether the edge EG for a tracking object among the recognized objects completely enters the area behind the vehicle BA. For example, when the vehicle C reverses, the back monitor screen 38 displayed on the display 9 is changed from the back monitor screen 38 in FIG. 11A to the one in FIG. 11B. More specifically, when the vehicle C reverses, the image 45 corresponding to the wheel stopper 101 (or either of the white line 103a or the obstacle 104) comes close to the image behind the vehicle RB in the back monitor screen. Then as shown in FIG. 11B, when a part of the image 45 corresponding to the wheel stopper 101 is not shown completely in the image behind the vehicle RB, the CPU 2 does not output the interrupt signal.

In accordance with the reversing of the vehicle C, the wheel stopper 101 is completely located under the rear bumper 25, which means the edge EG corresponding to the wheel stopper 101 completely moves out of the area behind the vehicle BA and goes out of the viewing area of the camera 20 as shown in FIG. 11C, and the image processor 8 outputs the interrupt signal to the CPU 2 in Step S1-13. After the CPU 2 inputs the interrupt signal in Step S2-3, the procedure goes to Step S3-1.

As shown in FIG. 10, in Step S3-1, the image processor 8 is controlled by the CPU 2 to determine whether predetermined recorded image data 15 are accumulated or not. In this embodiment, the image processor 8 searches only for the recorded image data 15 related to the position data 16 indicating a position, which is a predetermined distance (800 mm) behind the current position of the vehicle C in the direction of movement.

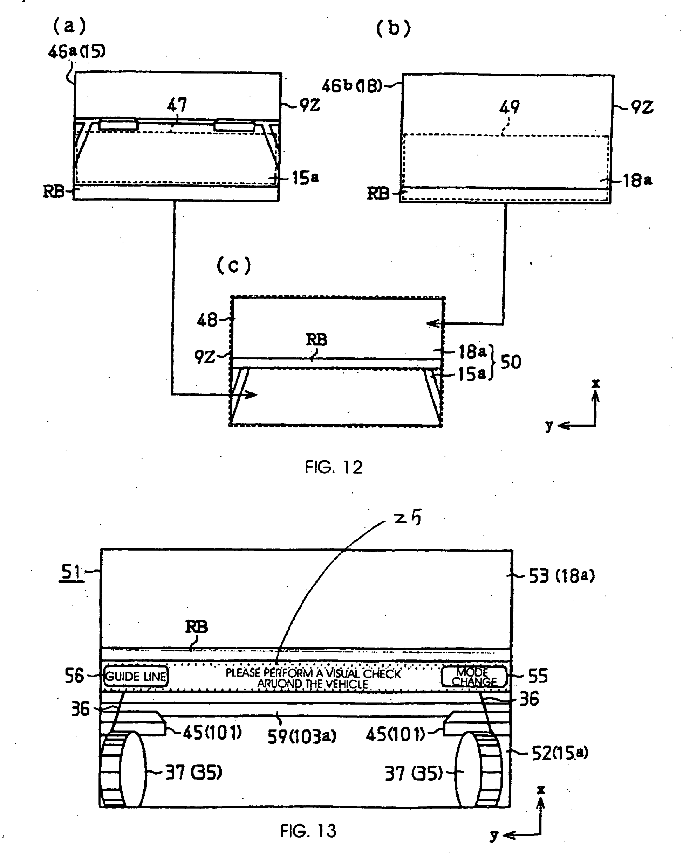

If the image processor 8 determines that the predetermined recorded image data 15 is not stored (Step S3-1=NO), the procedure goes to Step S2-4 and the back monitor screen 38 is displayed. When the image processor 8 determines that the predetermined recorded image data 15 is stored (Step S3-1=YES), the recorded image data 15 is read out from the image memory 7 (Step S3-2). At this time, for example, the recorded image data 15 such as the diagram 46a in FIG. 12A may be read out. The read out image data G is not current data obtained at the current position (the position where the wheel stopper 101 is located under the vehicle) but past data obtained before the vehicle arrived at the current position. Also in the read out image data 15, the current blind spot of the camera 20 from the current vehicle position is included. More specifically, the recorded image data 15 may include a rough area under the vehicle at the current position, which is from the road surface under the rear bumper 25 to the center axis of the rear wheel CR of the current vehicle C.

After the recorded image data 15 is read out, the image processor 8 obtains the current image data 18 obtained at the current position of the vehicle C through the CPU 2 (Step S3-3). At this time, for example, the obtained current image data 18 may be like that of the diagram 46b of FIG. 12B. The image processor 8 executes image processing such as image correction for the obtained recorded image data 15 or the current image data 18 (Step S3-4). The image processing may, for example, include distortion correction because of the wide-angle lens of the camera 20 and vision change for the recorded image data 15. In this example, only distortion correction may be executed. Note that, based on the direction detection signal input from the gyro 22 or a rudder angle detection signal input from a steering sensor (not shown), the recorded image data 15 may be rotated toward the direction of the current vehicle or be rotated with the rudder angle.

After such image processing, the image processor 8 outputs the parking assist image (Step S3-5). As shown in FIG. 12A, the image processor 8 abstracts a predetermined abstracted area 47 in the display area 9z from the read out recorded image data 15 and generates abstracted data 15a. In the present embodiment, the abstracted area 47 is a brachymorphic area located at the bottom of the display area 9z. Further, as shown in FIG. 12B, the image processor 8 abstracts an abstracted area 49, which has pre-specified coordinates, from the current image data 18 and generates abstracted current data 18a. The abstracted area 49 is a brachymorphic area located at the bottom of the display area 9z. As shown in the image 48 of FIG. 12C, a blended data 50, which includes the current abstracted data 18a on the top of the display area 9z and the data 15a abstracted from the recorded image data 15 on the bottom, is generated. The blended data 50 is output on the display 9 with various drawing data.

As a result, a parking assist image 51 is displayed on the display 9 as shown in FIG. 11D. As the parking assist image 51, a current image 52 based on the current image data 18 is displayed on the top of the display and an image revealing the area hidden by the blind spot 53 based on the recorded image data 15 is displayed on the bottom of the display. In the current image 52, the background of the current vehicle C is displayed. In the image revealing the area hidden by the blind spot 53, an image revealing the area hidden by the blind spot of the current camera 20 is displayed so that the road surface from the rear bumper 29 to the center of the rear wheel CR of the current vehicle C is displayed.

The image processor 8 also displays a band-like guidance display 54 between the current image 52 and the image revealing the area hidden by the blind spot 53. The guidance display 54 is not only for splitting the screen between the current image 52 and the image revealing the area hidden by the blind spot 53, but for displaying a guide to promote a visual check around the vehicle. Further in the guidance display 54, an operating section 55 for changing mode manually and an operating section 56 for overlapping the guide line 41 on the current image 52 are displayed. By operating the operating section 55, the mode for displaying the parking assist image 51 is switched to the mode for displaying the back monitor screen 38. By operating the operating section 56, the guide line 41 as described above is overlapped on the current image 52.

The image processor 8 draws the additional line 35 depending on the current position of the vehicle C on the image revealing the area hidden by the blind spot 53. For example, the image processor 8 allows the driver of the vehicle to determine whether the vehicle body is parked straight relative to the white line 103 or whether the vehicle body is beyond the parking area surrounded by the white line 103 based on the relative position between the framework line 36 and the image 59 of the white line 103 displayed in image revealing the area hidden by the blind spot 53.

When the recognized object is within the viewing area Z of the camera 20, the background of the vehicle is displayed fully so that the driver may know the position of the recognized object and the area around the object well. When the recognized object disappears out of sight, the parking assist image 51 may be displayed for displaying the area within where the recognized object is at the time.

The CPU 2 outputs the parking assist image 51 and determines whether there is the input end trigger (Step S3-6). In the case that the end trigger is input (Step S3-6=YES), the procedure is terminated. In the case that the end trigger is not input (Step S3-6=NO), the procedure returns to Step S2-2.

When the recognized object such as the wheel stopper 101 further moves from under the rear of the vehicle C, the image 45 of the wheel stopper 101 is displayed in the image revealing the area hidden by the blind spot 53 as shown in FIG. 13, so that it enables recognition of the relative position between the image 45 of the wheel stopper 101 and the wheel drawing line 37. Therefore, even if the recognized object disappears out of the viewing area from the camera 20, the position of the object may be continuously known because the recorded image data 15, which includes the blind spot with the object, is output. The driver may expect when the rear wheel CR will crash to the wheel stopper 101 based on the relative position between the image 45 and the wheel drawing line 37 as the additional line 35, and may park the vehicle at the right position in accordance with the rear wheel CR and the wheel stopper 101 consequently. Further the driver may slow down the vehicle to cushion the shock by bumping into the wheel stopper 101.

As shown in FIG. 13, when the image 59 of the white line 103a is displayed in the image revealing the area hidden by the blind spot 53, the relative distance between the rear wheel CR and the white line 103a may be recognizable so that the driver may park the vehicle C without running out of the parking space 102.

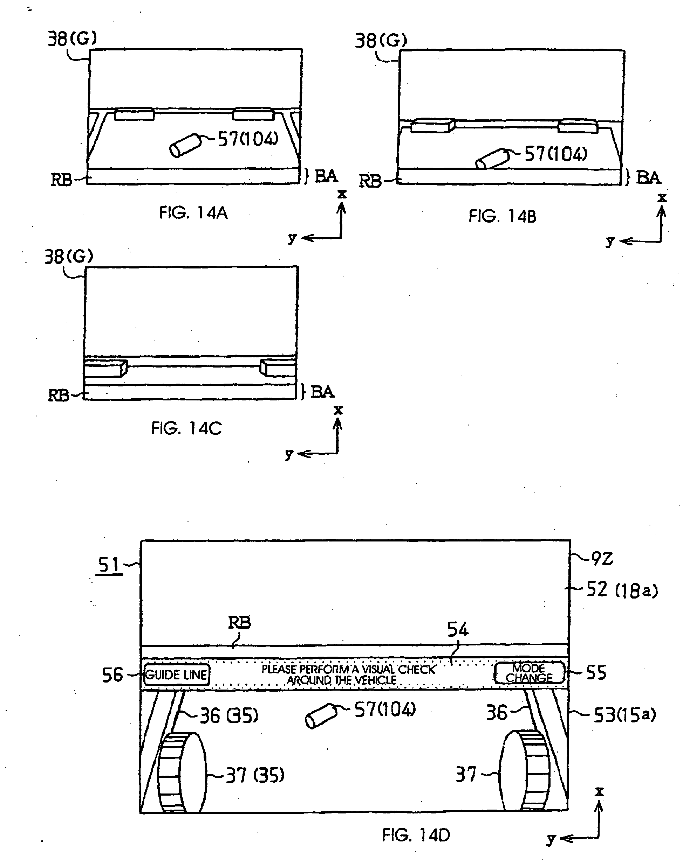

In case that the obstacle 104 exists ahead of the wheel stopper 101 and/or the white line 103a during reversing, and/or that either of the wheel stopper 101 or the white line 103a is not detected but only the obstacle 104 is detected, the image processor 8 tracks the edge EG of the obstacle 104 and determines whether the edge EG is included in the area behind the vehicle BA. As shown in FIGs. 14A and 14B, when the image 57 of the obstacle 104 does not completely enter the area behind the vehicle BA, the image processor 8 displays the back monitor screen 38 of FIGs. 14a and 14B. As shown in FIG. 14C, the image processor 8 waits until the image 57 (the edge EG) of the obstacle 104 completely enters the area behind the vehicle BA before displaying the parking assist image 51. In the case that the vehicle C further reverses, the parking assist image 51 in FIG. 14D is displayed. In the image revealing the area hidden by the blind spot 53, the image 57 of the obstacle 104 is displayed. Therefore, the relative position between the wheel drawing line 37 and the image 57 of the obstacle 104 may be recognizable and the driver may reverse the vehicle C (the rear wheel CR of the vehicle C) without bumping into the obstacle 104.

When such parking operation is terminated and when a shift position other than "reverse" is chosen, the CPU 2 determines that the end trigger is input based on the shift position signal input from the neutral start switch 24 and terminates the display of both of the back monitor screen 38 and the parking assist image 51.

According to the embodiment as described above, the user may obtain the following advantages.
1) According to the present embodiment, the parking assist apparatus 1 includes the CPU 2 for obtaining the image data G from the camera 20 mounted on the vehicle C. The parking assist apparatus 1 further includes the image memory 7 for storing the obtained image data G as the recorded image data 15 and the image processor 8 for recognizing objects. The image processor 8 determines when to display the parking assist image 51 on the basis of the relative position of the recognized object and the area behind the vehicle BA. In the case that the recognized object is within the viewing area of the camera 20, the back monitor screen 38 displays the area behind of the vehicle C without narrowing the view. Thus the driver may know the position of the recognized object and the current situation around the vehicle C based on the back monitor screen 38. When the recognized object goes under the bumper and out of the viewing area from the camera 20, the back monitor screen 38 displays the parking assist image 51. More specifically, when the object which the driver wants to check goes out of sight, the recorded image data 15 including the area in which the object is present is displayed, so that the driver may continuously check the position of the object. Further, in the parking assist image 51, the current image 52 may be displayed on the basis of the current image data 18, so that the driver may check the condition around the vehicle C as well.
2) According to the present embodiment, the image processor 8 displays the parking assist image 51 when it has been determined that the edge EG corresponding to the recognized object completely enters the area behind the vehicle BA. Therefore, while at least a part of the recognized object is within the viewing area Z of the camera 20, the current image from the camera 20 may be displayed on the back monitor screen 38. The driver may check the relative position between the rear of the vehicle C and the recognized object and also the current condition around the vehicle in a wide view.
3) According to the present embodiment, the current image 52 and the image revealing the area hidden by the blind spot 53 are displayed one above the other on the display area 9z when the vehicle C is being reversed (x-axis on the screen coordinate system). At this time, the image revealing the area hidden by the blind spot 53 is displayed so that the direction of movement in the image is opposite to that of the vehicle C. That is, in accordance with the reversing of the vehicle C, the image revealing the area hidden by the blind spot 53 is displayed so that the direction of movement in the image is the same as that of the recognized object within the display area 9z (the opposite direction to the x-axis). Therefore, even if the recognized object disappears out of sight from the display area 9z, the image revealing the area hidden by the blind spot 53 may be displayed so that the direction of movement in the image corresponds to the moving direction of the object so that the driver may intuitively know to which image the image revealing the area hidden by the blind spot 53 corresponds.
4) According to the present embodiment, the image processor 8 automatically detects the wheel stopper 101 or the white line 103a indicating the end of the parking space 102 by manipulating images. Therefore, the driver does not have to specify the recognized object manually and the convenience to the driver may be improved.
5) According to the present embodiment, the image processor 8 detects the obstacle 104 such as a can or a stone on the road surface. The image processor 8 further displays the parking assist image 51 when the obstacle 104 is located under the vehicle body. Thus, the displayed parking assist image 51 enables the driver to know the relative position and distance between the rear wheel CR and the obstacle 104 and the relative position and distance between the rear of the vehicle and the white line 103a.

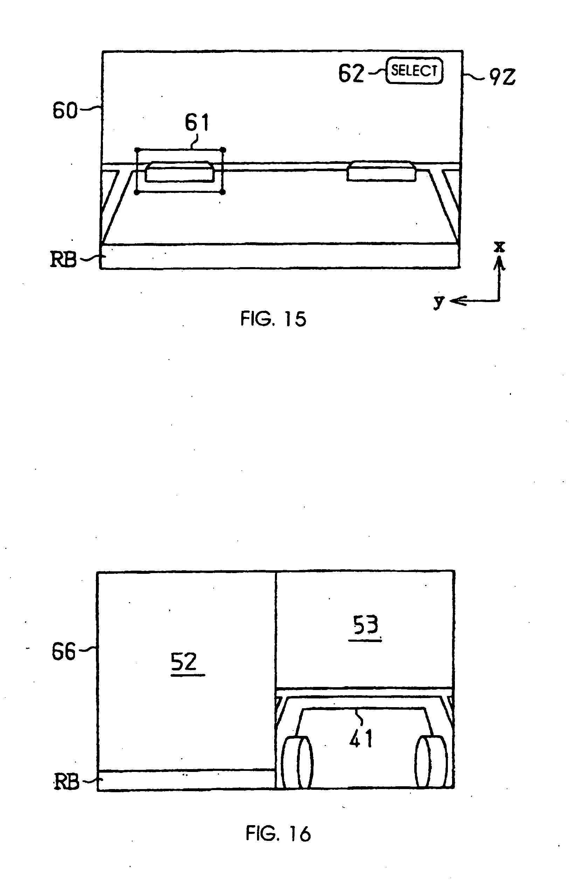

Note that, the present embodiment described above may be modified as follows.
* In the present embodiment, the CPU 2 of the parking assist apparatus 1 obtains the image data G for storing as the recorded image data 15 every time the vehicle C reverses a predetermined distance. However, the CPU 2 may obtain the image data G at regular time intervals.
* In the present embodiment, the image processor 8 may determine whether the obstacle 104 is a non-movable body or a movable body. This determination may, for example, be executed by detecting the difference between two image data G taken at differing time points. If the image processor 8 determines that the obstacle 104 is a movable body, the display mode does not need to be changed in order to display the parking assist image 51.
* In the present embodiment, the parking assist image 51 is displayed when the edge EG corresponding to the recognized object completely enters the area behind the vehicle BA. However not according to the invention, the parking assist image 51 does not necessarily need to be displayed at such a time and may be displayed at some other time. For example, as shown in FIG. 11B, the parking assist image 51 may be displayed when a part of the image 45 (the edge EG) of the recognized object such as the wheel stopper 101 enters the area behind the vehicle BA or when the relative distance between the image 45 (the edge EG) of the recognized object and the area behind the vehicle BA becomes a predetermined length in terms of the screen coordinate system.
* In the present embodiment, the parking assist image 51 is displayed when the image (the edge EG) corresponding to the recognized object such as the wheel stopper 101 enters the area behind the vehicle BA. However not according to the present invention, the parking assist image 51 may be displayed when the recognized object goes out of view of the camera 20 regardless of whether the object is within or outside the area behind the vehicle BA. For example, the parking assist image 51 may be displayed when the image (the edge EG) corresponding to the recognized object moves out from the display area 9z from the side by reversing of the vehicle C. Then the image with the blind spot including the recognized object therein may be used as the parking assist image 51.
* In the present embodiment, the image processor 8 detects the wheel stopper 101, the white line 103a, and the obstacle 104. However, the image processor may detect objects other than those described above. For example, any object indicating the end/side of the parking space 102 such as, for example, a wall around the parking space 102, a guardrail, a cone located on road or roadside, a fence, and/or a barricade, may be detected.
* In the present embodiment, the image processor 8 displays the parking assist image 51 when the wheel stopper 101 or the white line 103a indicating the end of the parking space 102 goes out of sight. However, the parking assist image 51 may be displayed when any white line other than the white line 103a goes out of the viewing area of the camera 20. For example, the parking assist image 51 may be displayed when the white line indicating the side of the parking space 102 or the starting point of the white line 103 in the shape of a "U" indicating the parking space 102 goes out of the viewing area of the camera 20.
* In the present embodiment, the image processor 8 recognizes the object such as the wheel stopper 101 and displays the parking assist image 51 when the recognized object completely enters the area behind the vehicle BA. However, the user may specify the object by operating on the display 9 manually. More specifically, as in the screen 60 of FIG. 15, the user may specify some points on the display 9 (touch panel) and operate, for example, the operating section 62, to set a small area 61 such as, for example, a triangle, a rectangle or a polygon, which has the specified points as vertexes. Also the user may specify only one point and the small area 61 may be set as a circle which has the specified point as the center. The small area 61 set as aforesaid may be tracked based on the speed pulse and the direction of the vehicle C in accordance with reversing of the vehicle C, so that the parking assist image 51 may be displayed when the small area 61 completely enters the area behind the vehicle BA. In this case, the user may need to specify only the object which he/she wants to track.
* In the present embodiment, the current image 52 and the image revealing the area hidden by the blind spot 53 are displayed one above the other on the display area 9z. However, as shown in the image 66 of FIG. 16, the current image 52 and the image revealing the area hidden by the blind spot 53 may be displayed side by side.

## Claims

1. A parking assist method comprising the steps of
obtaining (S1-3) current image data from an imagine device mounted on a vehicle taken at an initial position of the vehicle;
storing (S1-4) the obtained image data as recorded image data;
recognizing (S1-10) an object based on the image data;
determining (S1-12) based on a position of the recognized object in relation to the blind spot when to display a parking assist image, wherein an area hidden by a current blind spot is shown;
displaying (S3-5) the parking assist image using both the current image data taken at a current position of the vehicle and the recorded image data including the area hidden by the current-blind pot of the imaging device; and
displaying an indicator indicating the current position of the vehicle on the parking assist image; **characterized in that** the determining (s1-12) comprises determining that when a part or a full view of the recognized object is located under the vehicle body, the parking assist image is displayed.

2. A parking assist apparatus, comprising:
image data obtaining means for obtaining current image data (G) from an imaging device (20) mounted on a vehicle (C) taken at an initial position of the vehicle;
image data storage means (7) for storing the obtained image data (G) as recorded image data (15);
recognizing means (8) for recognizing an object based on the obtained image data,
determining means (8) for determining based on a position of the recognized object in relation to the blind spot of the imaging device when to display a parking assist image, wherein an area hidden by a current blind spot of the imaging device is shown ; and
display control means (8) for displaying the parking assist image using both current image data (G) taken at a current position of the vehicle (C) and recorded image data (15) including the area hidden by the current blind spot of the imaging device (20), the recorded image data (15) is stored in the image data storage means (7), and also displaying an indicator indicating the current position of the vehicle on the parking assist image,
**characterized by**
the determining means (8) determining that when a part or a full view of the recognized object is located under the vehicle body, the parking assist image is displayed.

3. The parking assist apparatus according to Claim 2, wherein:
the determining means (8) determines that when a part or a full view of the recognized object is located in an area behind the vehicle within the image data, the parking assist image is displayed.

4. The parking assist apparatus according to Claim 2 or Claim 3, wherein:
the imaging device (20) is mounted on the upper side of a bumper of the vehicle (C).

5. The parking assist apparatus according to any one of Claims 2 through 4, wherein:
the display control means (8) outputs the recorded image data (15) including the blind spot of the imaging device within a display area with respect to the moving direction of the recognized object, so that the direction of movement of the image corresponds to the moving direction of the object.

6. The parking assist apparatus according to any one of Claims 2 through 5, wherein:
the recognized object is a wheel stopper (101) or a white line (103) indicating a parking space (102); and
the recognizing means (8) recognizes the wheel stopper (101) or the white line (103) by manipulating the current image data (G).

7. The parking assist apparatus according to any one of Claims 2 through 6, wherein:
the recognized object is an obstacle (104) located within or around the parking space (102); and
the recognizing means (8) recognizes the obstacle (104) by manipulating the current image data (G).

8. The parking assist apparatus according to any one of Claims 2 through 5, wherein:
the recognizing means (8) recognizes the object based on an input operation by an operating switch (10) as input operation means (9) to specify the object.

9. The parking assist apparatus according to any one of Claims 2 through 8, wherein:
the parking assist apparatus (1) displays, provided that the parking assist apparatus determines it is not the time to display the parking assist image based on the determining means (2), the image data (G) taken at the current position of the vehicle instead of the parking assist image.

## Patentansprüche

1. Einparkhilfsverfahren mit den Schritten:
Gewinnen (S1-3) von augenblicklichen Bilddaten von einer an einem Fahrzeug montierten Bildgebungsvorrichtung, die an einer Anfangsposition des Fahrzeugs aufgenommen werden;
Speichern (S1-4) der gewonnenen Bilddaten als aufgezeichnete Bilddaten;
Erkennung (S1-10) eines Objekts basierend auf den Bilddaten;
Bestimmen (S1-12), basierend auf einer Position des erkannten Objekts in Relation zu dem toten Winkel, wann ein Einparkhilfsbild anzuzeigen ist, wobei ein Bereich, der durch einen augenblicklichen toten Winkel verdeckt ist, gezeigt wird;
Anzeigen (S3-5) des Einparkhilfsbilds unter Verwendung der augenblicklichen Bilddaten, die an einer augenblicklichen Position des Fahrzeugs aufgenommen werden, und der aufgezeichneten Bilddaten, die den Bereich enthalten, der durch den augenblicklichen toten Winkel der Bildgebungsvorrichtung verdeckt ist; und
Anzeigen eines Indikators, der die augenblickliche Position des Fahrzeugs auf dem Einparkhilfsbild angibt; **dadurch gekennzeichnet, dass** das Bestimmen (S1-12) ein Bestimmen aufweist, dass wenn eine teilweise oder eine vollständige Ansicht des erkannten Objekts unter dem Fahrzeugkörper lokalisiert ist, das Einparkhilfsbild angezeigt wird.

2. Einparkhilfsvorrichtung mit
einem Bilddatengewinnungsmittel zum Gewinnen von augenblicklichen Bilddaten (G) von einer an einem Fahrzeug (C) montierten Bildgebungsvorrichtung (20), die an einer Anfangsposition des Fahrzeugs aufgenommen werden;
einem Bilddatenspeichermittel (7) zum Speichern der gewonnenen Bilddaten (G) als aufgezeichnete Bilddaten (15);
einem Erkennungsmittel (8) zum Erkennen eines Objekts basierend auf den gewonnenen Bilddaten;
einem Bestimmungsmittel (8) zum Bestimmen, basierend auf einer Position des erkannten Objekts in Relation zu dem toten Winkel der Bildgebungsvorrichtung, wann ein Einparkhilfsbild anzuzeigen ist, wobei ein Bereich, der durch einen augenblicklichen toten Winkel der Bildgebungsvorrichtung verdeckt ist, gezeigt wird; und
einem Anzeigensteuerungsmittel (8) zum Anzeigen des Einparkhilfsbilds unter Verwendung der augenblicklichen Bilddaten (G), die an der augenblicklichen Position des Fahrzeugs (C) aufgenommen werden, und der aufgezeichneten Bilddaten (15), die den Bereich, der durch den augenblicklichen toten Winkel der Bildgebungsvorrichtung (20) verdeckt wird, enthalten, wobei die aufgezeichneten Bilddaten (15) in dem Bilddatenspeichermittel (7) gespeichert werden, und auch zum Anzeigen eines Indikators, der die augenblickliche Position des Fahrzeugs auf dem Einparkhilfsbild angibt, **dadurch gekennzeichnet, dass**
das Bestimmungsmittel (8) bestimmt, dass wenn eine teilweise oder eine vollständige Ansicht des erkannten Objekts unter dem Fahrzeugkörper lokalisiert ist, das Einparkhilfsbild angezeigt wird.

3. Einparkhilfsvorrichtung nach Anspruch 2, wobei
das Bestimmungsmittel (8) bestimmt, dass wenn eine teilweise oder eine vollständige Ansicht des erkannten Objekts in einen Bereich hinter dem Fahrzeug innerhalb der Bilddaten lokalisiert wird, das Einparkhilfsbild angezeigt wird.

4. Einparkhilfsvorrichtung nach Anspruch 2 oder 3, wobei
die Bildgebungsvorrichtung (20) auf der oberen Seite einer Stoßstange des Fahrzeugs (C) montiert ist.

5. Einparkhilfsvorrichtung nach einem der Ansprüche 2 bis 4, wobei
das Anzeigensteuerungsmittel (8) die aufgezeichneten Bilddaten (15) ausgibt, die den toten Winkel der Bildgebungsvorrichtung innerhalb eines Anzeigenbereichs bezüglich der Bewegungsrichtung des erkannten Objekts enthält, so dass die Richtung der Bewegung des Bilds der Bewegungsrichtung des Objekts entspricht.

6. Einparkhilfsvorrichtung nach einem der Ansprüche 2 bis 5, wobei
das erkannte Objekt ein Radanschlag (101) oder eine weiße Linie (103) ist, die einen Parkraum (102) angeben; und
das Erkennungsmittel (8) den Radanschlag (101) oder die weiße Linie (103) erkennt durch Manipulieren der augenblicklichen Bilddaten (G).

7. Einparkhilfsvorrichtung nach einem der Ansprüche 2 bis 6, wobei
das erkannte Objekt ein Hindernis (104) ist, das innerhalb oder um den Parkraum (102) herum lokalisiert ist; und
das Erkennungsmittel (8) das Hindernis (104) erkennt durch Manipulieren der augenblicklichen Bilddaten (G).

8. Einparkhilfsvorrichtung nach einem der Ansprüche 2 bis 5, wobei
das Erkennungsmittel (8) das Objekt basierend auf einer Eingabeoperation durch einen Betriebsschalter (10) als ein Eingabeoperationsmittel (9), um das Objekt zu spezifizieren, erkennt.

9. Einparkhilfsvorrichtung nach einem der Ansprüche 2 bis 8, wobei
die Einparkhilfsvorrichtung (1) die Bilddaten (G), die an der augenblicklichen Position des Fahrzeugs aufgenommen werden, an Stelle des Einparkhilfsbilds anzeigt, vorausgesetzt, dass die Einparkhilfsvorrichtung bestimmt, dass es nicht der Zeitpunkt ist zum Anzeigen des Einparkhilfsbilds basierend auf dem Bestimmungsmittel (2).

## Revendications

1. Procédé d'assistance au stationnement, comprenant les étapes suivantes :
on tire (S1-3) des données d'images courantes d'un dispositif d'imagerie monté sur un véhicule, prises dans une position initiale du véhicule ;
on stocke (S1-4) des données d'images obtenues comme données d'images enregistrées ;
on reconnaît (S1-10) un objet en se basant sur les données d'images ;
on détermine (S1-12), en se basant sur une position de l'objet reconnu par rapport au point aveugle du dispositif d'imagerie, quand afficher une image d'assistance au stationnement, dans lequel une zone dissimulée par un point aveugle courant est montrée en se basant sur une position de l'objet reconnu par rapport au point aveugle ;
on affiche (S3-5) l'image d'assistance au stationnement en utilisant à la fois les données d'images courantes prises dans une position courante du véhicule et les données d'images enregistrées comprenant la zone dissimulée par le point aveugle du dispositif d'imagerie ; et
on affiche un indicateur indiquant la position courante du véhicule sur l'image d'assistance au stationnement ; **caractérisé en ce que** la détermination (S1-12) comprend la détermination que, lorsqu'une vue partielle ou globale de l'objet reconnu est placée en dessous de la carrosserie du véhicule, l'image d'assistance au stationnement est affichée.

2. Appareil d'assistance au stationnement, comprenant :
un moyen d'obtention de données d'images (G) pour obtenir des données d'images d'un dispositif d'imagerie (20) monté sur un véhicule (C), prises dans une position initiale du véhicule ;
un moyen de stockage de données d'images (7) pour stocker les données d'images obtenues (G) comme données d'images enregistrées (15) ;
un moyen de reconnaissance (8) pour reconnaître un objet en se basant sur les données d'images obtenues ;
un moyen de détermination (8) pour déterminer, en se basant sur une position de l'objet reconnu par rapport au point aveugle du dispositif d'imagerie, quand afficher une image d'assistance au stationnement, dans lequel une zone dissimulée par un point aveugle courant est montrée en se basant sur une position de l'objet reconnu par rapport au point aveugle du dispositif d'imagerie ; et
un moyen de commande d'affichage (8) pour afficher l'image d'assistance au stationnement en utilisant à la fois les données d'images courantes (G) prises dans une position courante du véhicule (C) et les données d'images enregistrées (15), notamment la zone dissimulée par le point aveugle courant du dispositif d'imagerie (20), les données d'images enregistrées (15) sont stockées dans le moyen de stockage de données d'images (7), et également pour afficher un indicateur indiquant la position courante du véhicule sur l'image d'assistance au stationnement, **caractérisé en ce que**
le moyen de détermination (8) détermine que, lorsqu'une vue partielle ou globale de l'objet reconnu est placée en dessous de la carrosserie du véhicule, l'image d'assistance au stationnement est affichée.

3. Appareil d'assistance au stationnement selon la revendication 2, dans lequel :
le moyen de détermination (8) détermine que, lorsqu'une vue partielle ou globale de l'objet reconnu est placée dans la zone située derrière le véhicule dans les données d'images, l'image d'assistance au stationnement est affichée.

4. Appareil d'assistance au stationnement selon la revendication 2 ou la revendication 3, dans lequel :
le dispositif d'imagerie (20) est monté sur le côté supérieur d'un pare-chocs du véhicule (C).

5. Appareil d'assistance au stationnement selon l'une quelconque des revendications 2 à 4, dans lequel :
le moyen de commande d'affichage (8) délivre les données d'images enregistrées (15), notamment le point aveugle du dispositif d'imagerie dans une zone d'affichage par rapport au sens de déplacement de l'objet reconnu de sorte que le sens de déplacement de l'image corresponde au sens de déplacement de l'objet.

6. Appareil d'assistance au stationnement selon l'une quelconque des revendications 2 à 5, dans lequel :
l'objet reconnu est un arrêt de roue (101) ou une ligne blanche (103) indiquant un espace de stationnement (102) ; et
le moyen de reconnaissance (8) reconnaît l'arrêt de roue (101) ou la ligne blanche (103) en manipulant les données d'images courantes (G).

7. Appareil d'assistance au stationnement selon l'une quelconque des revendications 2 à 6, dans lequel :
l'objet reconnu est un obstacle (104) situé à l'intérieur ou autour de l'espace de stationnement (102) ; et
le moyen de reconnaissance (8) reconnaît l'obstacle (104) en manipulant les données d'images courantes (G).

8. Appareil d'assistance au stationnement selon l'une quelconque des revendications 2 à 5, dans lequel :
le moyen de reconnaissance (8) reconnaît l'objet en se basant
sur une commande d'entrée par un commutateur opérationnel (10) comme moyen de commande d'entrée (9) pour spécifier l'objet.

9. Appareil d'assistance au stationnement selon l'une quelconque des revendications 2 à 8, dans lequel :
l'appareil d'assistance au stationnement (1) affiche, pourvu que l'appareil d'assistance au stationnement détermine que ce n'est pas le moment d'afficher l'image d'assistance au stationnement en se basant sur le moyen de détermination (2), les données d'images (G) prises dans la position courante du véhicule au lieu de l'image d'assistance au stationnement.
